# FASCICULE DE BREVET EUROPEEN

(11) **EP 0 799 484 B1**
(45) Date de publication et mention de la délivrance du brevet: **12.08.1998**
(21) Numéro de dépôt: 95943248.5
(22) Date de dépôt: 20.12.1995
(51) Int. Cl.: G21C 3/326

(54) **ASSEMBLAGE COMBUSTIBLE A POISON CONSOMMABLE ET PROCEDE D'EXPLOITATION DE REACTEUR METTANT EN OEUVRE UN TEL ASSEMBLAGE**
BRENNSTABBÜNDEL MIT ABBRENNBAREN GIFT UND VERFAHREN ZUM BETRIEB EINES REAKTORS UNTER EINSATZ EINES SOLCHEN BRENNSTABBÜNDELS
FUEL ASSEMBLY WITH CONSUMABLE POISON AND METHOD FOR EXPLOITING A REACTOR BY IMPLEMENTATION OF SUCH ASSEMBLY

(30) Priorité: 23.12.1994 FR 9415593
(43) Date de publication de la demande: 08.10.1997
(73) Titulaire: FRAMATOME, 92084 Paris-La Défense (FR); COMPAGNIE GENERALE DES MATIERES NUCLEAIRES, F-78140 Velizy Villacoublay (FR)
(72) Inventeur: ROMARY, Jean-Michel, F-69006 Lyon (FR); BONNIAUD, Michel, F-69150 Décines-Charpieu (FR)
(74) Mandataire: Fort, Jacques
(86) Numéro de dépôt international: FR9501700
(87) Numéro de publication internationale: WO9620484

(56) Documents cités:
- EP-A- 0 155 865
- EP-A- 0 369 305
- US-A- 4 587 090
- KERNTECHNIK, vol. 52, no. 4, Août 1988, MUNCHEN DE, pages 2245-249, XP002000895 FRANCILLON ET AL.: "Fuel management at Fragema: experience, assents, perspectives"

## Description

L'invention concerne les assemblages combustibles pour réacteur à eau sous pression et, plus particulièrement, les assemblages du type comprenant des crayons de combustible répartis aux noeuds d'un réseau carré, dont au moins la plupart contient un matériau combustible qui est, pour la plupart au moins des crayons, de l'oxyde d'uranium enrichi en isotope 235 et/ou en plutonium ; les crayons sont généralement portés par un squelette ayant deux embouts reliés par des tubes guides et des grilles de maintien des crayons.

On connaît déjà des assemblages de ce type dans lesquels quelques-uns (moins d'un sur dix en général) des crayons de combustible contiennent un poison neutronique constitué de gadolinium à une teneur massique comprise entre 5 et 12 %. Le rôle du gadolinium est double. Il permet de réduire la réactivité initiale du coeur après un rechargement partiel ou total en assemblages combustibles neufs, du fait de son absorption de neutrons. La disparition progressive du gadolinium compense l'épuisement progressif du combustible. Grâce à une répartition appropriée des assemblages combustibles contenant du gadolinium dans le coeur, il permet d'arriver à une répartition radiale plus régulière de la puissance, et cela pendant tout un cycle de fonctionnement du coeur avant rechargement.

L'utilisation de tels assemblages, où les crayons qui contiennent du gadolinium ont tous la même teneur, a effectivement un effet favorable du point de vue de la réduction de réactivité en début de chaque cycle, avec corrélativement une réduction de la concentration nécessaire en bore dans l'eau, et une bonne distribution radiale du flux neutronique. Mais il n'est plus possible d'arriver à une gestion satisfaisante du coeur, lorsqu'on souhaite allonger la durée de chaque cycle d'utilisation du coeur à des périodes de 18 à 24 mois et/ou lorsqu'il est nécessaire de limiter les fuites neutroniques radiales pour une meilleure utilisation du combustible.

La présente invention vise notamment à fournir un assemblage combustible permettant une gestion plus favorable des coeurs, dans lesquels la réactivité initiale est élevée.

L'invention utilise la constatation que l'anti-réactivité initiale (c'est-à-dire dans un crayon neuf) apportée par le gadolinium présent dans le crayon n'est pas proportionnelle à sa teneur, mais augmente beaucoup moins vite avec la teneur dès que l'on dépasse une teneur de 1 % environ.

L'invention propose en conséquence un assemblage du type ci-dessus défini dans lequel les crayons comprennent, en plus de crayons ayant une teneur massique comprise entre 5 et 10 % environ de gadolinium, quatre à douze crayons ayant une teneur comprise entre 0,5 et 2 %, et ayant avantageusement 1 % environ, de gadolinium.

L'anti-réactivité des crayons à faible teneur en gadolinium diminuera beaucoup plus vite, à partir du début du cycle du réacteur, que celle des crayons à teneur nettement plus élevée. Ainsi, les crayons à faible teneur en gadolinium compensent la forte réactivité excédentaire initiale et permettent de dégager des marges sur le coefficient modérateur, sans pour autant avoir un effet défavorable sur la distribution radiale de puissance au cours du cycle.

On peut considérer que l'invention permet d'agir indépendamment sur les deux fonctions du gadolinium, réduire la réactivité initiale et contrôler la distribution radiale du flux. Dans le cas d'une seule teneur, la première fonction n'aurait pu être remplie, pour un cycle long, qu'avec un nombre élevé de crayons à 10 à 12 % de gadolinium qui aurait détérioré le contrôle de la distribution de puissance, en particulier en fin de cycle, lors de la disparition progressive du gadolinium.

Les caractéristiques ci-dessus, ainsi que d'autres, apparaîtront mieux à la lecture de la description qui suit de modes particuliers de l'invention, donnés à titre d'exemples non limitatifs. La description se réfère aux dessins qui l'accompagnent, dans lesquels :
- la figure 1 est une vue schématique en plan montrant la répartition des crayons de combustibles dans un premier assemblage conforme à l'invention ;
- la figure 2 montre la variation de l'anti-réactivité d'un crayon en fonction de sa teneur en Gd, dans deux assemblages ayant respectivement du combustible oxyde enrichi à 4,50 % d'uranium 235 (courbe en trait plein) et à 3,90 % (courbe en tirets) ;
- la figure 3 est un schéma montrant une répartition possible des assemblages dans un quart du coeur d'un réacteur nucléaire, suivant un mode de mise en oeuvre des assemblages.
- la figure 4, similaire à la figure 1, montre une seconde répartition, à huit crayons à teneur en gadolinium élevée ; et
- les figures 5 et 6 montrent l'évolution du facteur de pic de puissance en cours du temps.

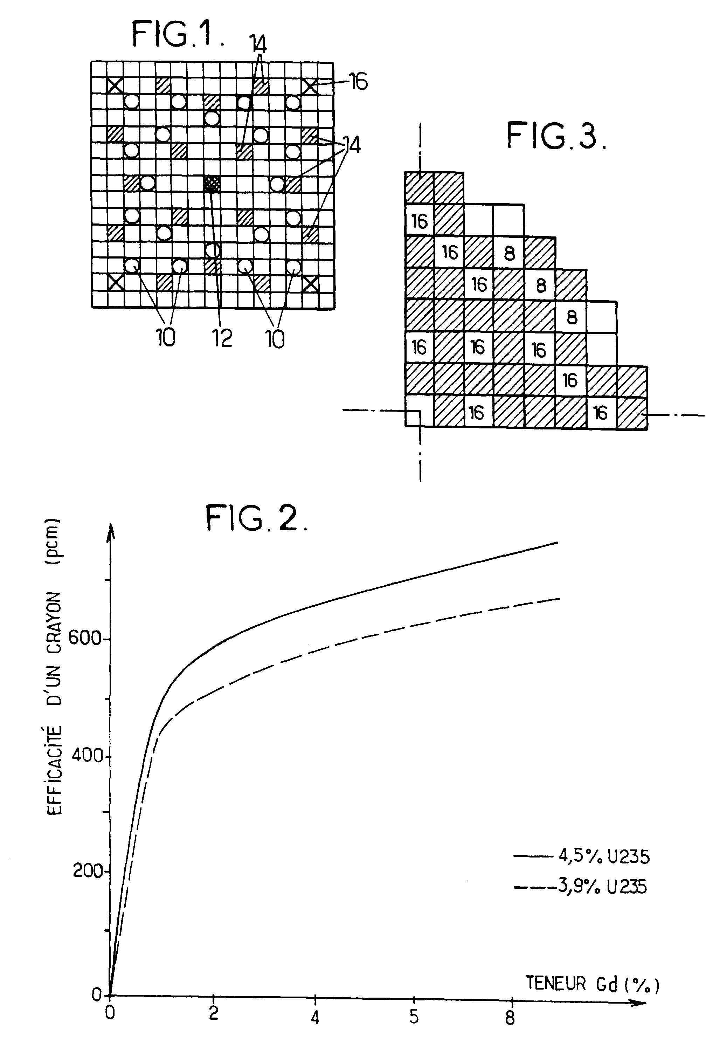

On ne décrira pas ici la constitution complète d'un assemblage auquel s'applique l'invention, car cette constitution peut être classique. La figure 1 montre seulement 15 x 15 emplacements occupés par des crayons combustibles et des tubes guides 10 dans un assemblage d'un genre couramment utilisé à l'heure actuelle. L'emplacement central 12 est occupé par un tube d'instrumentation. Les autres emplacements sont occupés par des crayons de combustible.

On connaît déjà des assemblages dont seize crayons 14, indiqués par des hachures sur la figure 1, ont une teneur initiale en oxyde de gadolinium de 10 % massique. Cette teneur n'est pas limitative. Pour des réacteurs différents, il serait possible d'adopter une teneur plus faible, par exemple comprise entre 5 % et 10 %. Il serait même possible de dépasser légèrement une teneur de 10 % et d'aller jusqu'à 12 %. Suivant le réacteur les crayons contenant du gadolinium contiennent soit de l'uranium enrichi en U235 ou en plutonium, à un enrichissement égal ou inférieur à celui des crayons voisins, soit de l'uranium naturel soit même de l'uranium appauvri. Dans d'autres cas, quatre à douze crayons 14, ou vingt crayons 14 sont prévus.

Dans les assemblages actuels, tous les crayons contenant un poison consommable ont la même teneur en gadolinium. Ces crayons sont répartis de façon régulière.

Dans l'assemblage suivant l'invention montré en figure 1, quatre crayons 16, indiqués par des croix, contiennent une faible teneur initiale en gadolinium. Ces crayons 16 sont disposés à proximité des angles de l'assemblage, par exemple à l'avant-dernier emplacement de chaque diagonale, lorsque la répartition des crayons 14 est celle mentionnée plus haut. Le même choix de support en uranium que pour les crayons à 10 % de gadolinium est possible.

La figure 2 montre que le rapport des anti-réactivités initiales apportées par un crayon 14 et par un crayon 16 n'est pas proportionnel au rapport des teneurs en gadolinium. On voit par exemple sur la figure 2 que, pour un assemblage constitué de crayons d'enrichissement initial de 4,50 % (rapport U 235/U 238 + U 235) l'anti-réactivité apportée par 1 % de gadolinium est d'un peu plus de 500 pcm (partie par cent mille) alors que l'anti-réactivité apportée par 8 % de gadolinium n'est que de 750 pcm environ. Une réduction de la teneur initiale en gadolinium dans un rapport de 8 à 1 ne se traduit donc que par une réduction de l'anti-réactivité dans un rapport de 1,47 à 1 environ.

La figure 3 montre, toujours à titre d'exemple, une répartition possible d'assemblages combustibles après remplacement d'un tiers des assemblages par des assemblages neufs. Les emplacements hachurés sont occupés par des assemblages ayant déjà effectué un ou deux passages en réacteur.

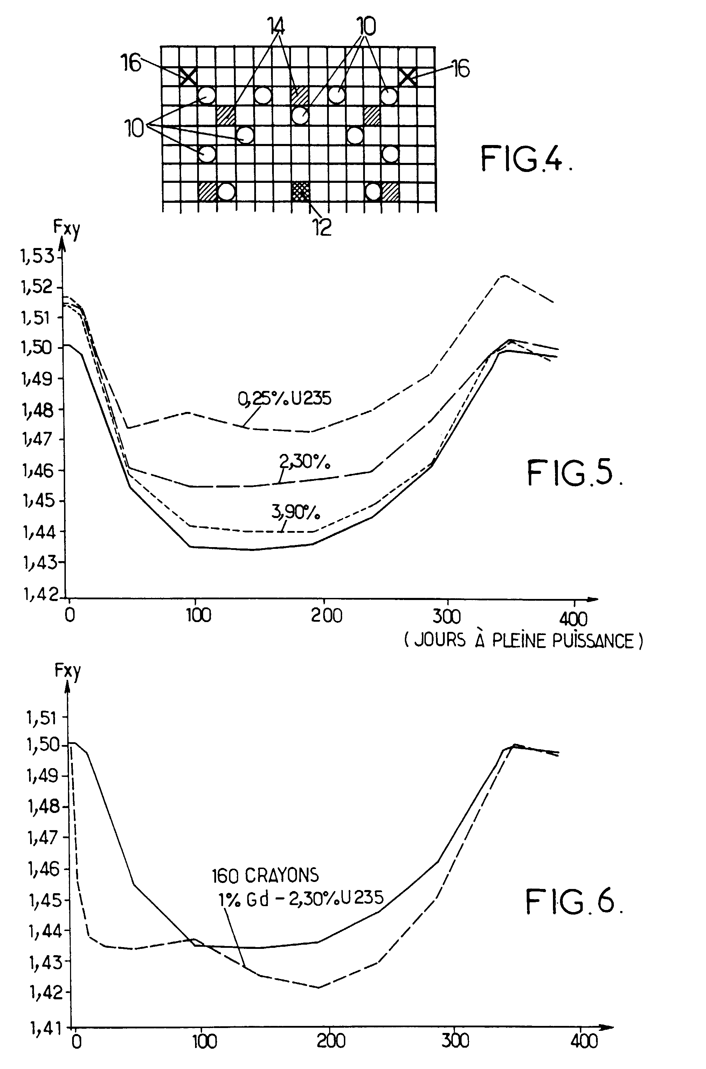

Les assemblages occupant les emplacements qui ne portent aucune indication sont dépourvus de gadolinium. Les autres contiennent quatre crayons contenant du gadolinium à la seconde teneur, c'est-à-dire 1 % environ. Ils contiennent également soit seize crayons ayant du gadolinium à 10 %, du genre montré en figure 1, soit huit crayons seulement contenant du gadolinium à 10 % à la première teneur, suivant la disposition montrée en figure 4, où les éléments correspondants à ceux de la figure 1 portent le même numéro de référence.

Comme on l'a indiqué plus haut, le combustible des crayons contenant du gadolinium peut avoir diverses compositions. Cependant, il est apparu en général préférable d'adopter, pour les crayons contenant du gadolinium à la seconde teneur, un enrichissement proche de celui des crayons avoisinants sans gadolinium.

Ce résultat apparaît notamment lorsque l'on compare les résultats obtenus avec diverses teneurs du combustible en U235. Des essais ont notamment été effectués avec des assemblages ayant seize crayons à 10 % Gd et quatre crayons à 1 % Gd, les assemblages étant au nombre tel qu'il y ait cent douze crayons à 1 % Gd au total. La figure 5 montre les résultats obtenus avec des crayons à 1 % Gd et combustible en oxyde d'uranium appauvri à 0,25 % d'uranium 235, en oxyde d'uranium enrichi à 2,30 % d'uranium 235 et en uranium enrichi à 3,90 % en uranium 235 (c'est-à-dire en même enrichissement que les crayons sans poison avoisinant). On constate l'intérêt d'adopter le même enrichissement pour tous les crayons, puisqu'il y a alors peu de dégradation du facteur de pic de puissance radiale Fxy par rapport à une gestion du type actuel, avec une durée de cycle de l'ordre de 350 jepp (jours équivalent pleine puissance).

D'autres essais ont montré que dans tous les cas la concentration initiale en bore pouvait être notablement réduite.

Le résultat peut être encore amélioré en ajoutant également quatre crayons à 1 % Gd dans les assemblages ne contenant que huit crayons à 10 % Gd, le nombre total de crayons contenant 1 % Gd étant alors de cent soixante pour l'ensemble du coeur. La figure 6 montre la variation du facteur de pic radial Fxy en fonction de l'épuisement pour la gestion de référence et pour un coeur à cent soixante crayons à 1 % Gd sur un combustible enrichi à 2,30 % en U 235.

On trouve dans ce cas un écart dans la concentration initiale de bore, par rapport à une gestion de référence, qui atteint - 103 pcm, ainsi qu'une réduction du coefficient de température du modérateur de 1,7 pcm/° C.

De nombreuses autres variantes de réalisation sont possibles. L'assemblage peut être de l'un quelconque des types connus, ayant un réseau dont le nombre de noeuds varie encre 14 x 14 et 20 x 20. Les crayons contenant du gadolinium à la seconde teneur peuvent avoir l'une quelconque de nombreuses dispositions respectant une symétrie de révolution d'ordre 4. En particulier des crayons contenant du gadolinium à la seconde teneur peuvent être placés dans la rangée de rive ; des crayons peuvent être à des noeuds adjacents à l'emplacement d'un tube guide ou du tube d'instrumentation. Si aucun tube d'instrumentation central n'est prévu, un crayon contenant du gadolinium à la seconde teneur peut être placé au centre de l'assemblage.

## Revendications

1. Assemblage combustible pour réacteur à eau sous pression, comprenant des crayons répartis aux noeuds d'un réseau carré et contenant du matériau combustible, certains des crayons (14) ayant une première teneur massique en gadolinium, comprise entre 5 et 12 %, caractérisé en ce que quatre à douze crayons supplémentaires (16) ont une seconde teneur massique en gadolinium, comprise entre 0,5 et 2 %.

2. Assemblage selon la revendication 1, caractérisé en ce que le combustible des crayons contenant du gadolinium à la seconde teneur est constitué par de l'oxyde d'uranium à un enrichissement en U 235 inférieur ou égal à celui des crayons avoisinants qui ne contiennent pas de gadolinium.

3. Assemblage selon l'une quelconque des revendications précédentes, caractérisé en ce que le combustible des crayons contenant du gadolinium à la première teneur est constitué par de l'oxyde d'uranium naturel, appauvri ou enrichi en uranium 235.

4. Assemblage selon l'une quelconque des revendications précédentes, caractérisé en ce que les crayons contenant du gadolinium à la première teneur sont au nombre de quatre à vingt.

5. Assemblage selon l'une quelconque des revendications 1 à 4, caractérisé en ce qu'il comporte quatre crayons à 1 % de gadolinium, situés à des emplacements sur les diagonales du réseau dans la dernière rangée avant la rangée de rive.

6. Assemblage selon l'une quelconque des revendications 1 à 4, caractérisé en ce que les crayons contenant du gadolinium à la seconde teneur sont répartis, avec une symétrie de révolution d'ordre 4, dans la rangée de rive.

7. Assemblage selon l'une quelconque des revendications 1 à 4 et 6, caractérisé en ce que les crayons contenant du gadolinium à la seconde teneur sont répartis, avec une symétrie de révolution d'ordre 4, en des noeuds du réseau adjacents aux noeuds occupés par des tubes guides ou un tube d'instrumentation central.

8. Assemblage selon l'une quelconque des revendications 1 à 7, dépourvu de tube d'instrumentation central, caractérisé en ce qu'un crayon contenant du gadolinium à la seconde teneur est placé au centre de l'assemblage.

9. Procédé d'exploitation de réacteur, à plusieurs passages successifs d'un même assemblage dans le réacteur à des emplacements différents dans le coeur, caractérisé en ce que l'on répartit dans le coeur des assemblages selon l'une quelconque des revendications précédentes, les uns à huit crayons contenant du gadolinium à la première teneur, à proximité de la périphérie du coeur, les autres à seize crayons contenant du gadolinium à la première teneur.

## Patentansprüche

1. Brennstabbündel für einen Druckwasserreaktor mit Brennstäben, die an den Knoten eines rechteckförmigen Netzes verteilt angeordnet sind und brennbares Material aufweisen, wobei bestimmte dieser Brennstäbe (14) einen ersten Massengehalt aus Gadolinium zwischen 5 und 12% aufweisen, dadurch gekennzeichnet, daß vier bis zwölf Zusatzbrennstäbe (16) einen zweiten Massengehalt aus Gadolinium zwischen 0,5 und 2% aufweisen.

2. Brennstabbündel nach Anspruch 1, dadurch gekennzeichnet, daß der Brennstoff der Brennstäbe, die Gadolinium des zweiten Gehalts aufweisen, durch Uraniumoxyd mit einer Anreicherung an U 235 gebildet wird, die geringer oder gleich jener der benachbarten Brennstäbe ist, die kein Gadolinium enthalten.

3. Brennstabbündel nach einem der vorhergehenden Ansprüche, dadurch gekennzeichnet, daß der Brennstoff der Brennstäbe, die Gadolinium des ersten Gehalts enthalten, von dem natürlichen Uraniumoxyd gebildet wird, das mit Uranium 235 entreichert oder angereichert ist.

4. Brennstabbündel nach einem der vorhergehenden Ansprüche, dadurch gekennzeichnet, daß die Brennstäbe, die Gadolinium des ersten Gehalts enthalten in der Größenzahl von vier bis zwanzig sind.

5. Brennstabbündel nach einem der Ansprüche 1 bis 4, dadurch gekennzeichnet, daß es vier Brennstäbe mit 1% Gadolinium aufweist, die an Plätzen auf den Diagonalen des Netzes in der letzten Reihe vor der Randreihe angeordnet sind.

6. Brennstabbündel nach einem der Ansprüche 1 bis 4, dadurch gekennzeichnet, daß die Brennstäbe, die Gadolinium des zweiten Gehalts enthalten, mit einer Drehsymmetrie 4ter Ordnung in der Randreihe verteilt angeordnet sind.

7. Brennstabbündel nach einem der Ansprüche 1 bis 4 und 6, dadurch gekennzeichnet, daß die Brennstäbe, die Gadolinium des zweiten Gehalts aufweisen, mit einer Drehsymmetrie 4ter Ordnung auf den Netzknoten verteilt angeordnet sind, die benachbart den Knoten sind, die von den Führungsrohren oder einem zentralen Instrumentationsrohr besetzt sind.

8. Brennstabbündel nach einem der Ansprüche 1 bis 7, ohne einem zentralen Instrumentationsrohr, dadurch gekennzeichnet, daß ein Brennstab, der Gadolinium des zweiten Gehalts enthält, im Zentrum des Brennstabbündels angeordnet ist.

9. Verfahren zum Betreiben eines Reaktors mit mehreren aufeinanderfolgenden Passagen eines selben Brennstabbündels in dem Reaktor an unterschiedlichen Plätzen in dem Kern, dadurch gekennzeichnet, daß in dem Kern der Brennstabbündel, nach einem der vorhergehenden Ansprüche, zum einen solche mit acht Brennstäben, die Gadolinum des ersten Gehalts enthalten, in der Nähe des Umfangs des Kerns vorgesehen sind und zum anderen solche mit 16 Brennstäben, die das Gadolinum des ersten Gehalts enthalten, vorgesehen sind.

## Claims

1. Fuel assembly for a pressurized water reactor, the assembly comprising rods distributed at the nodes of a square array and containing fuel material, some of the rods (14) having a first mass concentration of gadolinium in the range 5% to 12%, characterized in that four to twelve additional rods (16) have a second mass concentration of gadolinium comprised between 0.5% and 2%.

2. Assembly according to claim 1, characterized in that the fuel of the rods containing gadolinium at the second concentration is constituted by uranium oxide enriched in U 235 to an extent that is less than or equal to that of the adjacent rods that do not contain gadolinium.

3. Assembly according to claim 1 or 2, characterized in that the fuel of rods containing gadolinium at the first concentration is constituted by natural uranium oxide that is depleted or enriched in uranium 235.

4. Assembly according to any preceding claim, characterized in that the rods containing gadolinium at the first concentration are four to twenty in number.

5. Assembly according to any one of claims 1 to 4, characterized in that it includes four rods having 1% gadolinium situated at locations on the diagonals of the array in the last row before the edge row.

6. Assembly according to any one of claims 1 to 4, characterized in that the rods containing gadolinium at the second concentration are distributed in the edge row with rotational symmetry of order 4.

7. Assembly according to any one of claims 1 to 4 and 6, characterized in that the rods containing gadolinium at the second concentration are distributed with rotational symmetry of order 4 at nodes of the array adjacent to the nodes occupied by guide tubes or by a central instrumentation tube.

8. Assembly according to any one of claims 1 to 7, devoid of central instrumentation tube, characterized in that a rod containing gadolinium at the second concentration is placed at the center of the assembly.

9. A method of operating a reactor with a plurality of successive passages of a same assembly in the reactor at different locations within the core, characterized in that firstly assemblies according to any one of the preceding claims having eight rods containing gadolinium at the first concentration are distributed in the core, close to the periphery of the core, and secondly assemblies according tc any preceding claim are distributed in the core.
